# EUROPÄISCHE PATENTSCHRIFT

(11) **EP 2 997 341 B1**
(45) Veröffentlichungstag und Bekanntmachung des Hinweises auf die Patenterteilung: **17.11.2021**
(21) Anmeldenummer: 14725408.0
(22) Anmeldetag: 13.05.2014
(51) Int. Cl.: G01M 1/10

(54) **VORRICHTUNG UND VERFAHREN ZUR BESTIMMUNG VON TRÄGHEITSEIGENSCHAFTEN EINES OBJEKTS**
DEVICE AND METHOD FOR DETERMINING INERTIA PROPERTIES OF AN OBJECT
DISPOSITIF ET PROCÉDÉ DE DÉTERMINATION DES CARACTÉRISTIQUES D'INERTIE D'UN OBJET

(30) Priorität: 14.05.2013 DE 102013208875
(43) Veröffentlichungstag der Anmeldung: 23.03.2016
(73) Patentinhaber: Resonic GmbH, 12489 Berlin (DE)
(72) Erfinder: KLÖPPER, Robert, 12489 Berlin (DE)
(74) Vertreter: Pfenning, Meinig & Partner mbB
(86) Internationale Anmeldenummer: PCT/EP2014/059787
(87) Internationale Veröffentlichungsnummer: WO 2014/184201

(56) Entgegenhaltungen:
- WO-A1-2013/061989
- CN-A- 101 915 638
- CN-A- 102 998 057
- FR-A1- 2 712 085
- JP-A- H0 688 763

## Beschreibung

Gegenstand der vorliegenden Anmeldung ist eine Vorrichtung gemäß den unabhängigen Ansprüchen sowie Verfahren gemäß den nebengeordneten Ansprüchen.

Trägheitsmessungen zur Bestimmung der Trägheitseigenschaften eines Objekts mit einer räumlichen Massenverteilung (im Gegensatz zu Punktmassen) dienen der Simulation bzw. Vorhersage des dynamischen Verhaltens des Objekts, wie zum Beispiel einem Auto. Über die Bestimmung der Trägheitseigenschaften, d.h. der Masse, des Schwerpunkts sowie den Momenten (Trägheits- und/oder Deviationsmomenten) des Trägheitstensors, können Aussagen über beispielswiese das dynamische Fahrverhalten eines PKWs getroffen werden. Im Stand der Technik sind zahlreiche industrielle Anwendungen zur Bestimmung von Trägheitseigenschaften bekannt.

Eine im Stand der Technik bekannte Vorrichtung sind beispielsweise die Vorrichtungen "Resonic 100" oder "Resonic 350" der Resonic GmbH. Die Vorrichtung umfasst einen Träger sowie eine Messplattform und eine Mehrzahl von zwischen der Messplattform und dem Träger angeordneten Federelementen. Das zu vermessende Objekt wird auf der Messplattform platziert und die Messplattform durch einen willkürlichen Stoß ausgelenkt, so dass diese anschließend frei schwingt. Durch die Messung des Frequenzspektrums der freien Schwingungen können anschließend die Trägheitseigenschaften des auf der Messplattform platzierten Objekts bestimmt werden. Unter einer Messplattform wird nachstehend eine starre Aufnahme für das zu vermessende Objekt verstanden.

Eine weitere Vorrichtung zur Bestimmung von Trägheitseigenschaften ist aus der US 2012/0324991 bekannt. Die Vorrichtung umfasst einen Träger, eine Messplattform und ein zwischen der Messplattform und dem Träger angeordnetes sphärisches Gelenk. Die Messplattform wird nun aktiv (mittels Aktoren) bewegt und die dabei wirkenden Kräfte werden über Kraftsensoren bestimmt. Aus den Kraftmessungen und der Messung der Bewegung der Plattform lassen sich anschließend Trägheitseigenschaften des zu vermessenden Objektes bestimmen.

Eine Zentrifuge mit einer an Federn aufgehängten Platte ist aus der JP H06-88763 bekannt. Die FR 2 712 085 A1 zeigt ein 1-Freiheitsgrad-Pendel mit einem Mechanismus zur Rotation eines Prüflings.

Aufgabe der vorliegenden Anmeldung ist es, eine Vorrichtung zur Bestimmung von Trägheitseigenschaften zu schaffen, welche eine Alternative und/oder eine Verbesserung gegenüber den im Stand der Technik bereits bekannten Vorrichtungen bietet. Die Aufgabe wird gelöst gemäß der Vorrichtungen der unabhängigen Ansprüche und mittels der Verfahren der nebengeordneten Ansprüche.

Ein erster Aspekt der Erfindung umfasst eine Vorrichtung mit einem Träger, einer Messplattform zur Anordnung des Objekts, sowie eine Mehrzahl zwischen der Messplattform und dem Träger angeordneter Rückstellelemente. Die Messplattform ist gegenüber dem Träger in bis zu fünf Freiheitsgraden bewegbar (nicht jedoch in sechs Freiheitsgraden) und es ist eine Lager- und/oder Gelenkanordnung (nachfolgend auch Lageranordnung) derart zwischen dem Träger und der Messplattform angeordnet, dass diese eine Bewegung der Messplattform gegenüber dem Träger in mindestens zwei Freiheitsgraden, vorzugsweise mindestens drei Freiheitsgraden, ermöglicht.

Die Lager- und/oder Gelenkanordnung erlaubt eine Bewegung der Messplattform gegenüber dem Träger zwischen zwei und fünf Freiheitsgraden. Die Rückstellelemente sind derart zwischen dem Träger und der Messplattform angeordnet, so dass die Messplattform um eine Gleichgewichtslage frei schwingen kann. Die Rückstellelemente sind also hierbei als passive Rückstellelemente, und nicht als Aktoren zu verstehen, welche eine aktive Bewegung auf die Messplattform übertragen; die Vorrichtung gemäß der Anmeldung schwingt frei, sobald diese beispielsweise einmalig ausgelenkt wurde. Die Messung der Frequenzspektren der freien Schwingungen gibt Auskunft über die Trägheitseigenschaften. Eine dauerhafte, erzwungene Schwingung ist nicht notwendig. Bei der Vermessung eines Objekts werden bei n Freiheitsgraden die Eigenfrequenzen und Amplituden der n Schwingungen an vorzugsweise mindestens n Messpunkten erfasst.

Die Lager- und/oder Gelenkanordnung (nachfolgend Lageranordnung) ist geeignet die statische Last des auf der Messplattform anzuordnenden und zu vermessenden Objekts aufzunehmen. Durch eine Anordnung des Objekts direkt über der Lageranordnung ist die Position bzw. Orientierung der Messplattform unabhängig von dem zu vermessenden Objekt. Somit ist die Steifigkeits- und Trägheitswirkung der Rückstellelemente, welche die freien Schwingungen ermöglichen, für jedes zu vermessende Objekt im Wesentlichen gleich. Zudem ruht die statische Last des Objekts, das heißt das Gewicht auf der Lager- und/oder Gelenkanordnung und nicht, wie beispielsweise bei den bisherigen Vorrichtungen der Resonic GmbH, auf den Rückstellelementen. Da die Last des zu vermessenden Objektes nunmehr durch die Lager- und/oder Gelenkanordnung getragen wird, können die Rückstellelemente beliebig hart oder weich gewählt werden, so dass auch hochelastische Prüflinge, wie zum Beispiel Satelliten, vermessen werden können, da die Eigenfrequenzen der freien Schwingungen nahezu beliebig niedrig eingestellt werden können.

Weiterhin ist eine Kalibrierung der Vorrichtung, das heißt, das Ermitteln der Gesamtsteifigkeitsmatrix der Rückstellelemente zusammen mit der kombinierten Massenmatrix von Rückstellelementen und der Messplattform durch eine beispielsweise einmalige Kalibriermessung möglich. Da die Kalibrierung unabhängig vom Prüfling durchgeführt werden kann und die Orientierung bzw. Position der Messplattform unabhängig vom zu vermessenden Objekt ist, sofern die Last dessen über der Lageranordnung liegt, ist das mathematische Modell der Aufhängung der Messplattform nicht abhängig vom zu vermessenden Objekt. Dies ist im Gegensatz zu früheren Vorrichtungen, bei welchen die Kalibrierung nicht unabhängig vom zu vermessenden Objekt durchgeführt werden konnte, sondern aus den Eigenschaften der einzelnen Feder berechnet werden musste. Hierbei war die Modellierung jedoch nur für bestimmte Federn möglich bzw. praktikabel. Somit ist es bei der vorliegenden Vorrichtung nicht länger nötig ausschließlich beispielsweise Zugfedern zu verwenden, sondern kann ebenfalls auf andere passive Rückstellelemente zurückgreifen.

Im Gegensatz zum Stand der Technik, in welchem Zugfedern als passive Rückstellelemente zur Anwendung kommen, ist es bei der Vorrichtung der vorliegenden Anmeldung nicht länger notwendig ausschließlich diese zu verwenden, sondern es sind auch andere Rückstellelemente möglich. Bei der Verwendung von Zugefedern gemäß dem Stand der Technik wird der Raum um die Messplattform herum eingeschränkt, da die Zugfedern die Messplattform aufhängen und somit der Schwerpunkt der Messplattform unterhalb der oberen Aufhängungspunkte der Zugfedern liegt. Hierdurch wird jedoch die Größe des zu vermessenden Objektes im Wesentlichen auf ein Maß eingeschränkt welches kleiner ist als das Maß der Messplattform. Dadurch, dass die vorliegende Vorrichtung auch andere Arten von Rückstellelementen zulässt, kann das Objekt größer als die Messplattform gestaltet werden und ein Schwerpunkt der Messplattform, insbesondere ein Schwerpunkt des zu vermessenden Objekts oberhalb der Aufhängungspunkte der Rückstellelemente liegen. Hierdurch sind Messplattformen verwendbar, welche gegenüber dem zu vermessenden Objekt eine kleine Trägheit aufweisen und somit die Trägheitseigenschaften des Objekts genauer vermessen werden können.

Bei den Rückstellelementen kann es sich beispielsweise um Federelemente wie Druckfedern, Zugfedern, Blattfedern, Schraubenfedern, Kegelfedern, Torsionsfedern, Spiralfedern, Tellerfedern oder ähnlichen aus dem Stand der Technik bekannten Federn handeln. Es sind jedoch auch andere passive Rückstellelemente möglich, wie zum Beispiel luftgefüllte Zylinder, in welchen ein Kolben geführt wird, wobei eine Belastung des Kolbens die in dem Zylinder gehaltene Luftmasse komprimiert und es zu Druckschwingungen im Zylinder kommt. Weiter Rückstellelemente können dem Stand der Technik entnommen werden.

Bei dem Träger kann es sich beispielsweise um einen Boden eines Raumes oder einen vom Raum separaten Rahmen handeln, welcher mit Teilen eines Raumes verbunden werden kann oder aufgrund seiner Masse während einer Messung von Trägheitseigenschaften raumfest anordnenbar ist.

Bei der Messplattform zur Anordnung des Objektes kann es sich beispielsweise um einen Rahmen oder ein Gestell handeln, welches über die Rückstellelemente und in diesem Aspekt vorzugsweise unabhängig davon über die Lager- und/oder Gelenkanordnung mit dem Träger verbunden ist. D.h. die Rückstellelemente verbinden die Messplattform direkt mit dem Träger, so dass die Rückstellelemente nicht mit der Lager- und/oder Gelenkanordnung verbunden sind. In einer Variante kann der Träger selbst über weitere Lager- und/oder Gelenkanordnungen oder Rückstellelemente mit einem weiteren Träger oder dem Raum verbunden sein, wobei der weitere Träger vorzugsweise unterhalb des Trägers angeordnet ist. Die Rückstellelemente zwischen dem Träger und der Messplattform sind dabei derart angeordnet, dass jedes einzelne Rückstellelement in mehr als einem Freiheitsgrad eine Rückstellung bewirken kann. In einer weiteren Variante könnten ausschließlich Rückstellelemente zwischen dem weiteren Träger und der Messplattform aufweist.

Die Messplattform oder der Träger können aus Metallen, Verbundwerkstoffen (z.B. glasfaserverstärkter Kunststoff, Carbon, Aramid oder Kevlar) oder anderen ausreichend steifen Werkstoffen hergestellt werden und können sowohl aus Hohlelementen, Vollträgern oder in Sandwichbauweise aufgebauten Komponenten hergestellt werden. Insgesamt ist die Messplattform starr ausgebildet, so dass diese einen starren Körper bildet.

Unter einer Mehrzahl ist vorliegend eine Anzahl von gleich oder mehr als zwei Rückstellelementen zu verstehen.

Weitere Ausführungsformen des ersten Aspekts der Anmeldung sind in abhängigen Ansprüchen sowie den Ausführungsbeispielen offenbart.

In einer Ausführungsform sind die Mehrzahl der Rückstellelemente Federelemente. Federelemente sind vergleichsweise einfach herzustellen und können über einen breiten Anwendungsbereich bereitgestellt werden. Die Federhärte kann entsprechend der Masse des zu vermessenden Objektes gewählt werden, so dass beispielsweise bei einem Objekt mit einem großen Produkt aus Masse und Schwerpunkthöhe steifere Federn bzw. zusätzliche Federn ein Umkippen des auf der Messplattform angeordneten Objektes verhindern. Auf diese Weise können Objekte, deren Schwerpunkt nahezu beliebig oberhalb der Messplattform liegt, vermessen werden. Außerdem lassen sich durch Abstimmen der Federn auf die Masse und Schwerpunkthöhe die Eigenfrequenzen der freien Schwingungen beliebig senken, so dass auch extrem elastische Prüflinge gemessen werden können.

In einer weiteren Ausführungsform ist die Lager- und/oder Gelenkanordnung derart ausgebildet, dass die Messplattform gegenüber dem Träger in einer vorzugsweise vertikalen translatorischen Bewegungsrichtung fixiert ist, d.h. die Messplattform ist derart gelagert, dass bei einer Auslenkung der Messplattform dieselbige einen raumfesten Punkt besitzt. Im Falle einer Fixierung in der z-Richtung kann die Messplattform insgesamt nicht entlang der z-Achse translatorisch verschoben werden . Sofern beispielsweise die Messplattform in z-Richtung, das heißt, in Richtung der Schwerkraft gegenüber dem Träger in translatorischer Bewegungsrichtung fixiert ist, ist die Lager- und Gelenkanordnung besonders geeignet, um die statische Last des zu vermessenden Objektes aufzunehmen. Hierdurch vereinfacht sich wie eingangs erwähnt die Kalibrierung des Systems.

In einer weiteren Ausführungsform ist die Mehrzahl von Rückstellelementen derart gewählt, dass die Mehrzahl größer oder gleich einer Anzahl von Freiheitsgraden, in welchen die Messplattform frei bewegbar ist. Auf diese Weise kann sichergestellt werden, dass die Rückstellelemente ein Umkippen der Messplattform zuverlässig verhindern.

In einer weiteren Ausführungsform umfasst die Vorrichtung eine Mehrzahl von Rückstellelementen, welche sowohl vertikale als auch horizontale Kräfte aufnehmen.

In einer weiteren Ausführungsform umfasst die Mehrzahl von Rückstellelementen eine erste und eine zweite Gruppe von Rückstellelementen, wobei die erste Gruppe von Rückstellelementen derart angeordnet ist, dass diese vorwiegend vertikale Kräfte aufnehmen, und die zweite Gruppe von Rückstellelementen derart angeordnet sind, dass diese vorwiegend horizontale Kräfte aufnehmen. Dadurch dass die Rückstellelemente verschiedene Kräfte aufnehmen können, sind die unterschiedlichen Gruppen von Rückstellelementen in der Lage unterschiedliche Freiheitsgrade der Bewegung der Messplattform zu beschränken. So sind vertikale Rückstellelemente bevorzugt geeignet, um Rotationsfreiheitsgrade aufzunehmen, welche um die x- und y-Richtung, das heißt, um die Ebene senkrecht zur Schwerkraft gerichtet sind. Horizontale Rückstellelemente sind dazu geeignet translatorische Bewegung in der Ebene, sowie Rotationen um die z-Achse aufzunehmen. Eine gegebenenfalls in z-Richtung gerichtete translatorische Bewegung wird ebenfalls durch die erste Gruppe beschränkt.

In einer weiteren Ausführungsform ist der Träger vorzugsweise vollständig unterhalb der Messplattform angeordnet. Auf diese Weise limitiert der Träger nicht die Größe des zu vermessenden Objektes, welches über die Messplattform hinausragen kann. Hierdurch ist es möglich vergleichsweise große Objekte zu vermessen, so dass die Einsatzmöglichkeiten der Vorrichtung vergrößert werden.

Die Messplattform ist in einer Variante derart mit der Lager- und/oder Gelenkanordnung verbunden, dass die Bewegung in den zwei bis fünf Freiheitsgraden gleichzeitig erfolgt. D.h. mehrere aufeinanderfolgende Messungen, bei welchen jeweils unterschiedliche Freiheitsgrade angeregt werden, sind nicht notwendig..

In einer weiteren Ausführungsform umfasst die Lager- und/oder Gelenkanordnung mindestens ein Luftlager. Luftlager haben unter anderem den Vorteil, dass sie beispielsweise durch Pressluft betrieben ein reibungsarmes Lager darstellen können. Zudem sind sie kostengünstig im Handel erhältlich und besitzen eine hohe Steifigkeit, so dass die Kinematik der freien Schwingungen die Eigenschaften des zu vermessenden Objektes im Wesentlichen unverfälscht wiederspiegelt. Bei den Luftlagern kann es sich beispielsweise um ein ebenes Luftlager oder um ein sphärisches Luftlager handeln.

In einer weiteren Ausführungsform umfasst die Lager- und/oder Gelenkanordnung mindestens ein sphärisches Lager und/oder -gelenk, ein Torsionslager, ein Kugellager und/oder ein Kardanlager, welches derart zwischen dem Träger und der Messplattform angeordnet ist, dass die Messplattform in mindestens zwei Freiheitsgraden bewegbar ist. Mittels der vorgenannten Lager ist es möglich, beispielsweise eine Rotation beispielsweise um die x- und die y-Achse zu ermöglichen. Zudem dient derjenige Punkt der Messplattform, an welchem das Lager angreift, als Unterstützung des Gewichtes des zu vermessenden Objekts, da das vorgenannte Lager bzw. Gelenk eine Bewegung beispielsweise entlang der z-Achse verhindert.

In einer weiteren Ausführungsform umfasst die Lager- und/oder Gelenkanordnung ein ebenes Gleitlager, welches derart angeordnet ist, dass die Messplattform in mindestens drei Freiheitsgraden bewegbar ist. Dabei kann es sich um zwei translatorische Richtungen innerhalb der Ebene und eine Rotation um die z-Achse handeln. Es sind jedoch auch ebene Gleitlager möglich, welche lediglich eine einzelne translatorische Richtung oder ausschließlich eine Rotation um die z- Achse ermöglichen.

Hierbei sei erwähnt dass die verschiedenen Lager miteinander kombiniert werden können, so dass zwischen zwei und fünf Freiheitsgraden der Messplattform zur Vermessung der Trägheitseigenschaften des zu vermessenden Objekts zur Verfügung stehen.

In einer weiteren Ausführungsform umfasst die Lager- und/oder Gelenkanordnung eine Vorrichtung zur Justage, so dass die Lageranordnung gegenüber dem Träger und/oder der Messplattform in einer vorbestimmten Position fixierbar ist. Vorzugsweise ist die vorbestimmte Position eine "Null-Position", das heißt, in dieser Position ist eine bestimmte Ausrichtung der Komponenten der Lageranordnung gegenüber der Messplattform bzw. dem Träger gegeben. Auf diese Weise ist sichergestellt, dass aus dieser "Null-Position" heraus die vorgenannte Kalibrierung der Vorrichtung anwendbar ist. Von daher ist das Herbeiführen der "Null-Position" eine Hardware-Kalibrierung.

In einer weiteren Ausführungsform ist die Lager- und/oder Gelenkanordnung derart ausgebildet, dass ein Schwerpunkt der Messplattform direkt ober- bzw. unterhalb des Schwerpunkts der Messplattform angeordnet ist.

In einer weiteren Ausführungsform ist auf der Messplattform eine Schwerependelanordnung angeordnet, welche zusätzlich zu den Freiheitsgraden, welche durch Bewegungen zwischen dem Träger und der Messplattform vorhanden sein können, weitere Freiheitsgrade hinzufügen kann. Allerdings ist weiterhin die Limitierung vorhanden, dass die Messplattform gegenüber dem Träger in zumindest einem Freiheitsgrad limitiert ist.

In einer weiteren Ausführungsform umfasst die Vorrichtung eine Vielzahl von Sensoren, um eine Bewegung der Messplattform gegenüber dem Träger messtechnisch zu erfassen. Durch die Erfassung der Bewegung gegenüber der Messplattform gegenüber dem Träger, kann das Frequenzspektrum der Schwingungen bestimmt werden und so vorzugsweise aus den Eigenfrequenzen und Amplituden der Schwingungen der Trägheitstensor, der Schwerpunkt sowie die Masse bestimmt werden.

Ist die Anzahl der Freiheitsgrade, in welchen die Messplattform bewegt werden kann, auf unter fünf Freiheitsgrade reduziert, kann nur eine Untermenge von zehn Parametern (sechs Parameter des Trägheitstensors, drei Parameter des Schwerpunkt und die Masse) bestimmt werden, es muss vorbekanntes Wissen über das Objekt vorhanden sein oder es müssen mehrere Messungen durchgeführt werden, wobei das Objekt zwischen zwei Messungen gegenüber dem Träger anders ausgerichtet werden muss.

Vorzugsweise sind die Sensoren am Träger oder an der Messplattform angeordnet oder erstrecken sich sowohl an der Messplattform als auch am Träger. Geeignete Sensoren sind beispielsweise Laserabstandsensoren, welche durch Triangulation den Abstand bestimmter Punkte des Trägers und der Messplattform zueinander messen und so Frequenzspektren und Amplituden bestimmen.

Zwar können Kraftsensoren, Beschleunigungssensoren oder Gyroskopsensoren eingesetzt werden, diese sind jedoch nicht notwendig, und in zahlreichen Ausführungsformen auch nicht vorgesehen.

Vorzugsweise werden die Daten der Sensoren an einen an der Vorrichtung angeordneten Datenbus weitergeleitet, wobei der Datenbus derart konfiguriert ist, dass ein drahtloser oder verdrahteter Verbindungskanal zu einer Datenverarbeitungsanlage aufgebaut werden kann. Der Datenbus ist zur Kopplung der Vorrichtung an eine Datenverarbeitungsanlage vorgesehen, wobei die Daten der Sensoren durch den Datenbus an die Datenverarbeitungsanlage übermittelt werden. In alternativen Ausführungsformen können Teile der Signalverarbeitung in der Vorrichtung selbst angeordnet sein. Dies umfasst beispielsweise A/D-Wandler.

Die Mehrzahl der Sensoren kann derart gewählt werden, dass die Anzahl größer oder gleich einer Anzahl von Freiheitsgraden ist, in welchen die Messplattform frei bewegbar ist. Hierdurch können die verschiedenen Eigenfrequenzen und Schwingungsamplituden gut aufgelöst werden.

Ein zweiter Aspekt der vorliegenden Anmeldung betrifft eine Vorrichtung zur Bestimmung von Trägheitseigenschaften eines Objektes, wobei die Vorrichtung einen Träger, eine Messplattform zur Anordnung des Objekts, sowie eine Lager- und/oder Gelenkanordnung umfasst, welche zwischen dem Träger und der Messplattform angeordnet ist, derart, dass die Lager- und /oder Gelenkanordnung eine Bewegung der Messplattform gegenüber dem Träger in mindestens zwei Freiheitsgraden ermöglicht.

In diesem Aspekt der Erfindung ist der Träger oberhalb der Messplattform angeordnet und die Messplattform ist derart ausgebildet, dass das Objekt unter der Messplattform angeordnet wird. Weiterhin ist Lager- und/oder Gelenkanordnung derart über eine Mehrzahl von Rückstellelementen derart mit dem Träger verbunden, dass die Lager- und /oder Gelenkanordnung gegenüber dem Träger senkrecht zu einer Richtung der Gewichtskraft in zwei Freiheitsgraden bewegbar ist.

Die Anordnung bzw. Vorrichtung des zweiten Aspekts entspricht damit einem Schwerependel, welches in entweder einer oder zwei Freiheitsgraden schwingen kann, wobei der Aufhängungspunkt des Schwerependels in mindestens einem zusätzlichen Freiheitsgrad bewegbar ist. Hierdurch können mindestens zwei Freiheitsgrade verwendet werden, um die Trägheitseigenschaften eines unterhalb der Plattform angeordneten Objektes zu bestimmen. Die Lageranordnung kann ähnlich wie beim ersten Aspekt der Anmeldung eine in mindestens zwei Freiheitsgraden bewegbares Kugelgelenklager oder Kardanlager umfassen. Die Rückstellelemente stellen in einer Variante des zweiten Aspekts eine direkte Verbindung zwischen dem Träger und der Lager- und/oder Gelenkanordnung her, so dass die Lager- und/oder Gelenkanordnung beispielsweise in der xy- Ebene, d.h. der Ebene senkrecht zur Schwerkraft, geführt ist und durch die Rückstellelemente in eine Ruhelage innerhalb der xy-Ebene rückstellbar ist. Eine direkte Verbindung zwischen den Rückstellelementen und der Messplattform ist in dieser Variante nicht notwendig und in zahlreichen Ausführungsbeispielen nicht vorgesehen, da in dieser Ausführungsform, bei welcher das Messobjekt unterhalb der Messplattform angeordnet ist, die Schwerkraft eine Rückstellung des Messobjekts in die Ruhelage zulässt.

Analog zum ersten Aspekt sei erwähnt, dass der Träger nicht nur ein separates Bauteil sein kann, sondern auch durch eine Raumdecke oder Ähnliches gebildet sein kann. Führungen der Rückstellelemente werden dann an der Decke oder Ähnlichem befestigt.

Ein dritter Aspekt der Erfindung behandelt ein Verfahren zur Kalibrierung einer vorbeschriebenen Vorrichtung, wobei eine Massenmatrix der Plattform und der Mehrzahl der Rückstellelemente und eine Gesamtsteifigkeitsmatrix der Rückstellelemente in einer Kalibriermessung bestimmt werden. Für die Kalibriermessung werden verschiedene Messungen mit verschiedenen Kalibrierobjekten, welche bekannte Trägheitseigenschaften besitzen, durchgeführt. Auf diese Weise kann die Kalibrierung einmalig nach dem Aufbau oder der Herstellung der Vorrichtung durchgeführt werden und muss anschließend nur in regelmäßigen, größeren Zeitintervallen durchgeführt werden.

In einer weiteren Ausführungsform der Erfindung, umfasst der Träger und/oder die Messplattform jeweils einen Adapter, welcher derart ausgebildet ist dass dieser eine Aufnahme für jeweils mindestens ein Rückstellelement umfasst. Vorzugsweise ist der Adapter derart ausgebildet, dass eine unterschiedliche Anzahl von Rückstellelementen angeordnet werden kann. Der Adapter kann dabei beispielsweise ein, zwei, drei oder mehr Rückstellelemente aufnehmen. Dies ist von großem Nutzen wenn die Vorrichtung zur Bestimmung von Trägheitseigenschaften unterschiedliche Objekte, insbesondere großer unterschiedlicher Masse und Objekte mit großer Schwerpunkthöhe, verwendet werden soll. Über das Hinzufügen von Rückstellelementen kann die Vorrichtung die gewünschte Gesamtsteifigkeit, welche für das zu vermessende Objekt geeignet ist, erreicht werden. Für jeden Adapter kann beispielsweise ein Rückstellelement hinzugefügt werden und für die verschiedenen Rückstellelemente jeweils die Gesamtsteifigkeitsmatrix im Rahmen einer Kalibriermessung bestimmt werden. Auf diese Weise ist die Vorrichtung über eine großen Parameterraum von Massen, Schwerpunkthöhe und Größe des Objektes einsetzbar.

Weitere Ausführungsformen der Erfindung werden anhand der nachfolgenden Ausführungsbeispiele genauer erläutert.

Es zeigen
- Figur 1: eine erste Ausführungsform der Vorrichtung des ersten Aspekts mit Zugfedern;
- Figuren 2a und 2b: Illustration einer Ausführungsform mit Druckfedern und die Anpassungsmöglichkeiten der Vorrichtung;
- Figuren 3a bis 3c: Ausführungsformen einer Lager- und/oder Gelenkanordnung;
- Figuren 4a bis 4h: weitere Ausführungsformen einer Lager- und/oder Gelenkanordnung;
- Figuren 5a bis 5d: Ausführungsformen einer Vorrichtung mit Justagemechanismus;
- Figuren 6a bis 6d: weitere Ausführungsformen einer Vorrichtung;

- Figuren 7a und 7b: Ausführungsform einer Vorrichtung mit Schwerependelanordnung;
- Figuren 8a bis 8d: weitere Ausführungsformen einer Vorrichtung;
- Figur 9: Ausführungsform einer Vorrichtung gemäß des zweiten Aspekts der Anmeldung;
- Figuren 10a / 10b: Illustration der Kalibrierung einer Vorrichtung gemäß des ersten oder zweiten Aspekts.

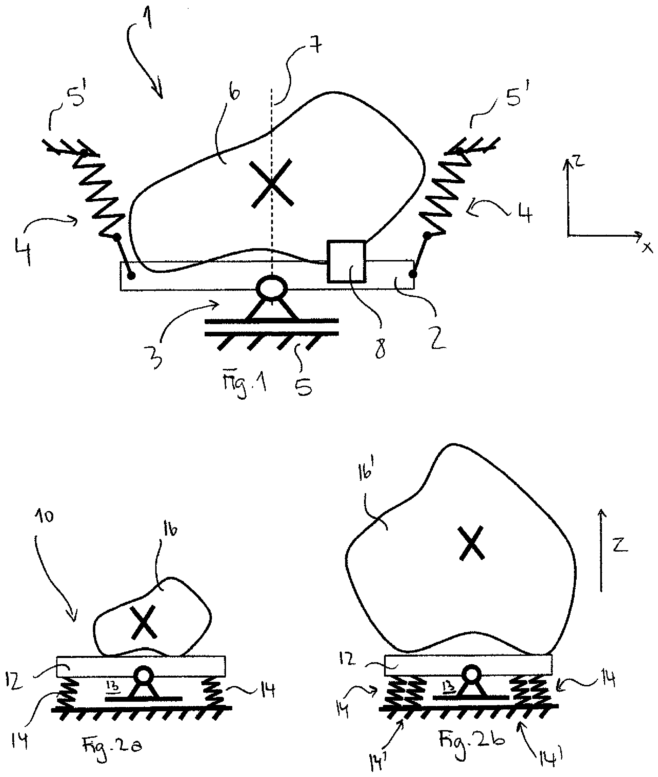

Figur 1 zeigt eine Vorrichtung 1, welche eine Messplattform 2, eine Lager- und/oder Gelenkanordnung 3 (nachfolgend auch nur Lageranordnung genannt), sowie eine Mehrzahl von Rückstellelementen 4 umfasst. Zudem ist die Lageranordnung 3 mit einem "Träger" 5 verbunden, welcher im vorliegenden Falle lediglich ein Fußboden ist. Die Rückstellelemente 4 sind ebenfalls an einer Wand 5' angeordnet, welche Teil des Raumes sein kann, in welchem sich der Träger 5 befindet. Alternativ kann der die Lageranordnung 3 auf einem Gestell angeordnet sein, welches ebenfalls die Aufhängungen für die Rückstellelemente 4 umfasst.

Auf der Messplattform 2 ist ein zu vermessendes Objekt 6 angeordnet, wobei das Objekt 6 derart auf der Messplattform 2 angeordnet ist, dass dessen Schwerpunkt entlang der Linie 7 verläuft. Um eine genaue Justage des Schwerpunkts über der Gelenkanordnung 3 zu erreichen, wird zusätzlich eine Zusatzmasse 8 auf oder an der Messplattform angeordnet und derart bewegt, bis der Schwerpunkt direkt über der Lageranordnung 3 liegt.

In dem vorliegenden Ausführungsbeispiel sind die Rückstellelemente 4 Zugfedern. Wird die Messplattform angestoßen, beispielsweise in der eingezeichneten z-Richtung, schwingt die Messplattform 2 um die Rotationsfreiheitsgrade der x- und y-Achse, da die Lageranordnung 3 wie schematisch dargestellt die Bewegung in zwei Freiheitsgraden erlaubt. Wie anhand der folgenden Ausführungsbeispiele genauer erläutert werden wird, kann die Lageranordnung 3 auch derart ausgebildet sein, dass bis zu fünf Freiheitsgrade (dann vorzugsweise drei Rotationsfreiheitsgrade und zwei translatorische Freiheitsgrade in x- und y-Richtung) bewegt werden. Eine periodische oder wiederholte Anregung des Systems ist nicht notwendig. Die als Zugfedern ausgebildeten Rückstellelemente befinden sich in dem eingezeichneten Zustand in der sogenannten Null-Position, in welcher die Messplattform senkrecht zur z-Richtung steht. Wird die Messplattform aus dieser Null-Lage ausgelenkt beginnt das System um die Null-Position frei zu schwingen. Die durch die freie Schwingung bewirkten Eigenfrequenzen und Amplituden des Systems geben zusammen mit der Kalibrationsmatrix der Vorrichtung 1 Aufschluss darüber, wie die Trägheitseigenschaften des Objektes 6 beschaffen sind. Allgemein können die Eigenfrequenzen und/oder die Amplituden der freien Schwingungen gemessen werden.

In den Figuren 2a und 2b wird auf die Anpassungsmöglichkeiten der Vorrichtung eingegangen. In den Figuren 2a und 2b ist jeweils dieselbe Vorrichtung 10 mit einer Messplattform 12 und einer jeweils identischen Lageranordnung 13 dargestellt.

In der Figur 2a wird ein Objekt 16, weiches gegenüber dem Objekt 16' der Figur 2b eine kleinere Masse, einen in z-Richtung niedrigeren Schwerpunkt und kleinere Ausmaße aufweist, auf der Plattform 12 gehalten. Bei den dargestellten Rückstellelementen handelt es sich um Druckfedern 14, welche zwischen den Träger 15, welcher durch ein nicht genauer eingezeichnetes Gestell gegeben ist, verbunden. In dieser Ausführungsform sind die Rückstellelemente 14 nicht mit der Lageranordnung 13 verbunden. Um die Vorrichtung 10 zur Vermessung des größeren Objektes 16' zu adaptieren, werden zusätzlich zu den Rückstellelementen 14 identische Rückstellelemente 14' hinzugefügt, welche die Gesamtsteifigkeit der Vorrichtung 10 gegenüber dem in der Figur 2a dargestellten Ausführungsbeispiel erhöhen. Auf diese Weise kann das System an das zu vermessenden Objekt angepasst und dementsprechend skaliert werden. Die Rückstellelemente werden vorzugsweise in einen Adapter eingesteckt, -geschraubt oder-gehakt. Dadurch können die Eigenfrequenzen des Systems verringert werden und vorzugsweise minimiert werden ohne die Stabilität des Systems zu beeinträchtigen. Hierdurch werden auch besonders elastische Körper vermessbar

In der Figur 2a und 2b ist die Messplattform oberhalb des Trägers angeordnet.

Auf diese Weise ist es möglich, wie beispielsweise in der Figur 2b dargestellt, ein Objekt 16' zu vermessen, welches Ausmaße aufweist die über die Messplattform 12 hinausragen.

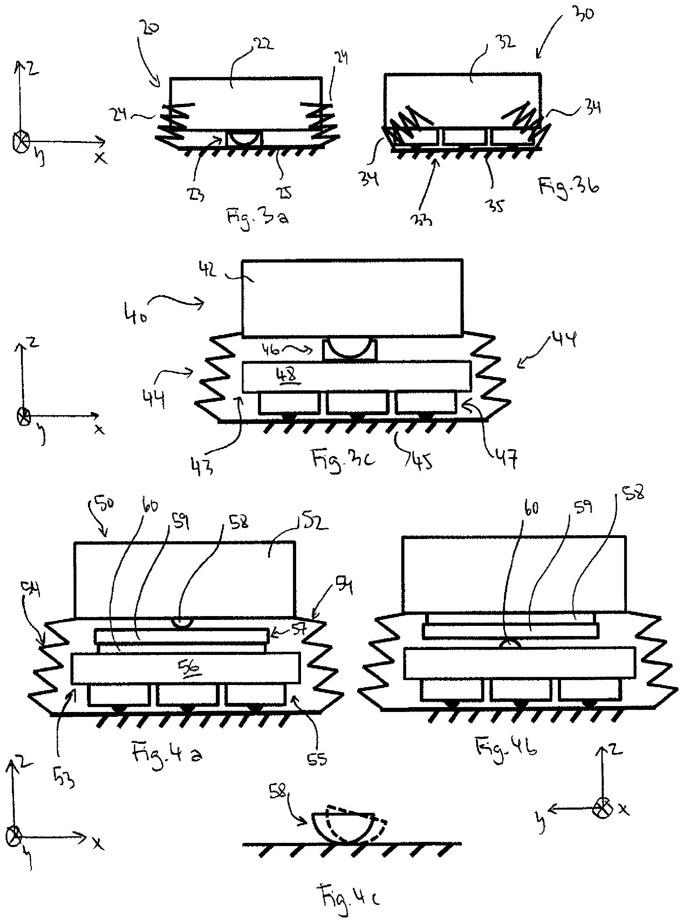

Anhand der Figuren 3 soll erläutert werden wie verschiedene Lager- und/oder Gelenkanordnungen eine Bewegung in einer Vielzahl von Freiheitsgraden der Messplattform führen können.

In der Figur 3a ist eine Vorrichtung 20 gezeigt, welche eine Messplattform 22, eine Lageranordnung 23 und als Druckfedern ausgebildete Rückstellelemente 24 umfasst. Die Lageranordnung 23 und jeweils ein Ende der Rückstellelemente 24 ist mit einem Rahmen 25 verbunden, welcher als Träger dient. Bei der Lageranordnung 23 umfasst das Lager ein sphärisches Luftlager, so dass die Messplattform in drei Rotationsfreiheitsgraden um die x-, y- und z-Achse, bewegt werden kann. Wird die Messplattform 22 zur freien Schwingung ausgelenkt, kann sich die Messplattform 22 gegenüber dem Träger 25 in diesen zwei Rotationsfreiheitsgraden bewegen. Alternativ zu dem sphärischen Luftlager sind andere sphärische Lager wie zum Beispiel ölgelagerte sphärische Formen, Kardangelenke (mit zwei Freiheitsgraden um die x-und y. Achse herum) oder Ähnliches einsetzbar. Das sphärische Luftlager ist zwar vergleichsweise teuer, hat jedoch eine sehr gute (d.h. geringe) Reibung, das heißt, die Messplattform kann im Wesentlichen reibungsfrei um die zwei Rotationsfreiheitsgrade schwingen.

In der Figur 3b ist eine Vorrichtung 30 mit einer Messplattform 32, sowie einer Lageranordnung 33 und Rückstellelemente 34 gezeigt. Desweiteren ist ein Träger 35 vorhanden. Die Messplattform 32, die Rückstellelemente 34 sowie der Träger 35 sind mit den in der Figur 3a beschriebenen Elementen vergleichbar. Die Lageranordnung 33 umfasst mindestens ein ebenes Luftlager, welches über eine hohe Steifigkeit verfügt und innerhalb der xy-Ebene translatorische Bewegungen erlaubt. Zudem erlaubt es eine Bewegung um die z-Achse herum, so dass die dargestellte Lageranordnung 33 die Bewegung der Messplattform gegenüber dem Träger in drei Freiheitsgraden ermöglicht. In der vorliegenden Ausführungsform umfasst die Lageranordnung 3 ebene Luftlager, welche in regelmäßigen Abständen auf der dem Träger zugewandten Unterseite der Messplattform 32 angeordnet sind.

Sowohl das in der Figur 3a als auch das in der Figur 3b dargestellte Lager wird mittels Druckluft betrieben. Hierzu weist der Träger in manchen Ausführungsformen Druckluftzuleitungen auf, welche beispielsweise mit einem internen oder externen Kompressor verbunden werden können. In einer Variante kann die Anordnung der Figur 3a auf einer Anordnung der Figur 3b angeordnet sein, wobei die in der Beschreibung der Figur 3b erwähnte Messplattform dann der Träger der Gesamtanordnung wäre, und der in der Beschreibung der Figur 3b erwähnte Träger der weitere Träger wäre. Der in der Beschreibung der Figur 3a erwähnte Träger entspräche dann der Messplattform der Figur 3b. Die Rückstellelemente der Gesamtanordnung würden unabhängig sowohl zwischen dem weiteren Träger und dem Träger als auch zwischen dem Träger und der Messplattform verlaufen.

In der Figur 3c ist eine Vorrichtung 40 gezeigt, welche eine Messplattform 42, eine Lageranordnung 43, Rückstellelemente 44 und einen Träger 45 umfasst. Die Lageranordnung 43 umfasst ein sphärisches Lager 46 wie im Zusammenhang mit der Lageranordnung 23 der Figur 3a beschrieben. Weiterhin umfasst die Lageranordnung 43 eine Mehrzahl von ebenen Luftlagern 47 wie im Rahmen der Figur 3b beschrieben. Die Lageranordnung 43 kombiniert das sphärische Lager 46 und die ebenen Luftlager 47 zu einer einzigen Lageranordnung. Im vorliegenden Ausführungsbeispiel verbindet das sphärische Lager 46 die Messplattform 42 mit einer Zwischenplatte 48 der Lageranordnung 43. An der Unterseite der Zwischenplatte 48 sind die ebenen Luftlager 47 angeordnet und ermöglichen eine Bewegung entlang der x/y-Ebene. Durch die Kombination des sphärischen Lagers 46 und der ebenen Luftlager 47 ist die Messplattform 42 nunmehr in drei Rotationsfreiheitsgraden und in zwei translatorischen Freiheitsgraden innerhalb der x/y-Ebene bewegbar. Wird die Messplattform 42 ausgelenkt schwingt die Messplattform aufgrund der Rückstellelemente um eine Nullposition und kann Bewegungen in den fünf vorgenannten Freiheitsgraden ausführen.

Aus der Messung beispielsweise der Eigenfrequenzen und der Schwingungsformen ist eine Bestimmung der Trägheitseigenschaften des zu vermessenden Objektes in einer einzigen Messung möglich. An dieser Stelle sei angemerkt, dass, obgleich die Vorrichtung bislang in Verbindung mit einem Träger erwähnt wurde, in einer Ausführungsform die Vorrichtung auch dahingehend verstanden wird, dass diese lediglich Rückstellelement umfasst, welche mit einem Träger verbindbar sind und die Lageranordnung ebenfalls mit dem Träger verbindbar ist. Somit bildet beispielsweise die in der Figur 3c gezeigte Einheit ohne den Träger bereits einen selbstständigen Anmeldungsgegenstand unabhängig von der verwendeten Lageranordnung.

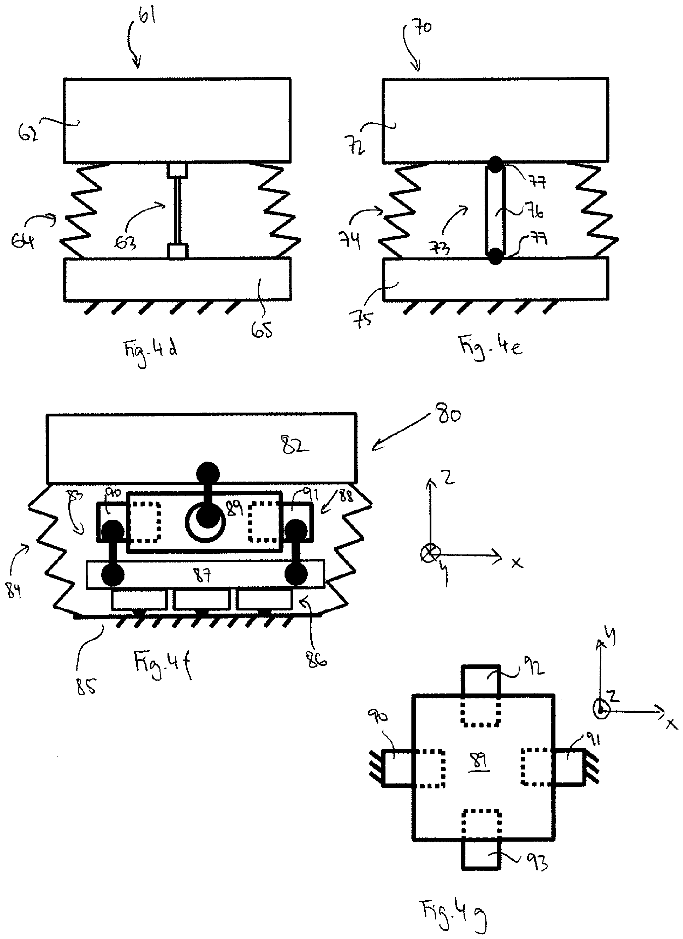

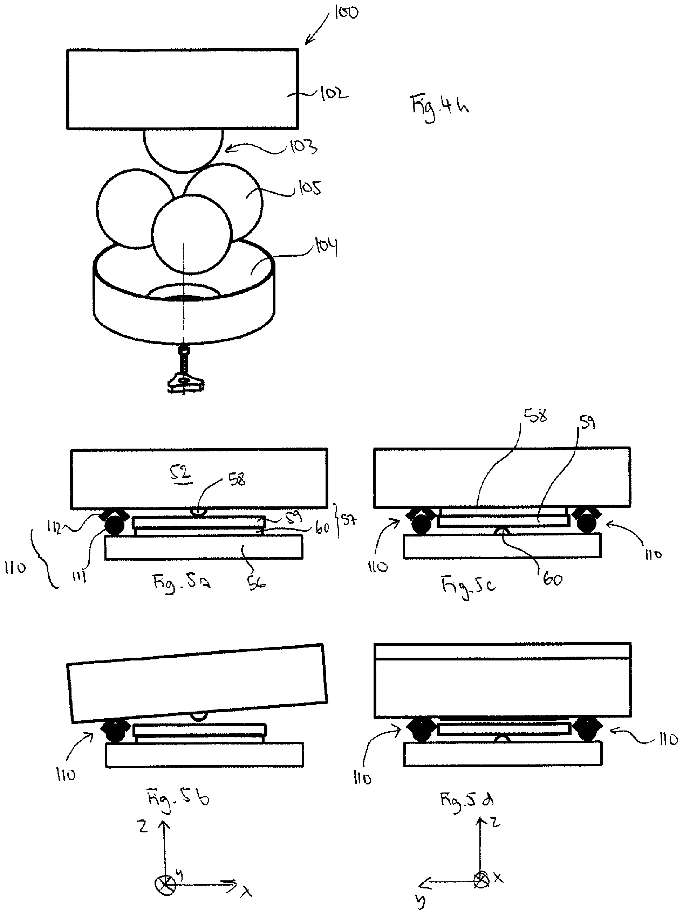

Anhand der Figuren 4 sollen weitere Varianten von Lageranordnungen erläutert werden. In der Figur 4a ist eine Vorrichtung 50 offenbart, welche eine Messplattform 52, eine Lageranordnung 53 sowie Rückstellelemente 54 umfasst. In der Figur 4b ist dieselbe Anordnung um 90° um die z-Achse gedreht dargestellt. Die Lageranordnung 53 umfasst, wie in der Figur 3c gezeigt, eine Vielzahl von ebenen Luftlagern 55, welche ein Gleiten der Messplattform 52 auf dem Träger ermöglichen. Die ebenen Lager sind mit einer Zwischenplatte 56 verbunden. Auf der Zwischenplatte ist eine weitere Lageranordnung 57 angeordnet, welche eine Bewegung in den zwei Rotationsfreiheitsgraden um die x- und y-Achse ermöglicht. Die Lagervorrichtung 57 umfasst einen ersten Halbzylinder 58, welcher sich entlang der y-Achse erstreckt und welcher mit seiner flachen Seite an der Messplattform 52 angeordnet ist. Der Halbzylinder ist somit geeignet, eine Bewegung der Messplattform um die y-Achse zu ermöglichen. Dies ist schematisch in der Figur 4c zu sehen, bei welcher zum einen der Zylinder 58 in der Null-Lage (mit durchgezogener Linie markierter Zylinder) und aus der Null-Lage ausgelenkt (mit gestrichelter Linie markierter Zylinder) dargestellt ist. Der Zylinder 58 ist auf einer Platte 59 angeordnet, welche eine beispielsweise geschliffene und gehärtete Platte ist. Am unteren Rand der Platte ist ein weiterer Halbzylinder 60 angeordnet, welcher sich entlang der x-Achse erstreckt. Obgleich dies nicht zwingend notwendig ist wird der Einfachheit wegen angenommen, dass der Halbzylinder mit seiner flachen Seite an der Unterseite der Platte 59 angeordnet ist und eine mit dem Zylinder 58 vergleichbare Länge und einen vergleichbaren Krümmungsradius aufweist. Wird die flach Seite des Halbzylinders auf der Platte 56 angeordnet, so rollt der Halbzylinder auf der Platte 59 ab, so dass nur diese gehärtet sein muss.

Die Bewegung um den Zylinder 60 ermöglicht eine Rotation der Messplatte 52 um die x-Achse herum. Somit ermöglicht die Lageranordnung 57 eine Bewegung um die beiden Rotationsfreiheitsgrade x und y. Anstelle der kreisrunden Zylinderform können auch ovale oder ellipsoidförmige Formen oder mehrere in Reihe angeordnete Halbkugeln gewählt werden. Die Lageranordnung 57 hat gegenüber Messerlagern große Vorteile, da die Flächenpressung der Lageranordnung gegenüber Messerlagern deutlich verringert ist. Das Abrollverhalten der Halbzylinder wird im Messalgorithmus modelliert.

Als Materialien für die Lageranordnung 57 kommen gehärtete Metalle, Keramiken oder diamantähnliche Verbundwerkstoffe infrage. Das Grundprinzip der in der Lageranordnung aufeinander angeordneten Halbzylinder (oder anderen gekrümmten Formen) entspricht dem eines Kardangelenks, da es eine Bewegung um zwei Rotationsfreiheitsgrade ermöglicht. Die Lageranordnung 57 kann auch ohne weitere ebene Lager als selbständige Lageranordnung in einer Vorrichtung gemäß der Anmeldung zum Einsatz kommen.

Die Figuren 4d bis 4h zeigen weitere Lageranordnungen. In der Figur 4d ist eine Vorrichtung 61 mit einer Messplattform 62, einer Lageranordnung 63, Rückstellelementen 64 und einem Trägerrahmen 65 dargestellt. Die Rückstellelemente verbinden die Unterseite der Messplattform mit der Oberseite des Trägerrahmens 65. Selbiges gilt für die Lagervorrichtung 63, welche die Messplattform 62 in deren Mitte, das heißt deren Schwerpunkt unterstützt. Bei der Lageranordnung 63 handelt es sich um eine elastische Stange, welche die drei Rotationsfreiheitsgrade und translatorische Bewegungen der x/y-Ebene ermöglicht. Die Stange ist ohne weitere Gelenke mit der Messplattform und dem Träger verbunden. Ein Vorteil dieser Lösung ist die einfache Ausgestaltung der Lageranordnung 63 mit welcher jedoch Bewegungen in bis zu fünf Freiheitsgraden ermöglicht werden, ein Nachteil ist, dass gegebenenfalls auf ein adaptiertes Kalibrierverfahren zurückgegriffen werden muss. Als Material für die Stange kommen Metalle, Kunststoffe oder Verbundwerkstoffe infrage.

In der Figur 4e ist eine Vorrichtung 70 dargestellt, welche ähnlich wie in der Figur 4d eine Messplattform 72, eine Lageranordnung 73, Rückstellelemente 74 und einen Trägerahmen 75 umfasst. Der Trägerahmen 75 ist dabei gegenüber dem Boden ortsfest und kann sich entlang diesem nicht bewegen. Die Lageranordnung 73 umfasst eine starre Stange 76, welche über zwei Kugelgelenke 77 und 78 mit der Messplattform bzw. dem Tragerahmen verbunden ist. Auf diese Weise ist eine Bewegung in fünf Freiheitsgraden möglich. Vorteil dieser Lösung ist der einfache Aufbau der Lageranordnung, Nachteil ist jedoch, dass die geometrische Steifigkeit der Lageranordnung berücksichtigt werden muss.

Eine weitere Ausführungsform einer Vorrichtung ist in der Figur 4f dargestellt. Die Vorrichtung 80 umfasst eine Messplattform 82, eine Lageranordnung 83, Rückstellelemente 84 welche mit dem Boden 85 verbunden sind. Die Lageranordnung 83 umfasst eine Vielzahl von ebenen Luftlagern, welche eine Bewegung der Messplattform 82 gegenüber dem Boden 85 in der x/y-Richtung und um die z-Achse herum ermöglichen. Weiterhin umfasst die Lageranordnung eine Platte 87, auf welcher eine weitere Lageranordnung 88 aufgesetzt ist. Die Lagervorrichtung 88 ist ein auf Festkörpergelenken basierendes Lager. Die Lageranordnung 88 umfasst dabei eine Platte 89, in welche im vorliegenden Ausführungsbeispiel vier Festkörpergelenke 90 bis 93 angeordnet sind, wie auch in der Figur 4g gezeigt. Dabei sind die Festkörpergelenke 90 und 91 über Lagerböcke mit der Platte 87 verbunden, die Festkörpergelenke 92 und 93 über Stangen mit der Messplattform 82 verbunden. Um die Gelenke 92 und 93 ist eine Bewegung um die y-Achse und um die Gelenke 90 und 91 eine Bewegung um die x-Achse herum möglich. Als Festkörpergelenk können beispielsweise auf sogenannte "flexural pivots" zurückgegriffen werden, welche einen zweigeteilten Mantel aufweisen und die beiden Mantelteile über einen Mechanismus gegeneinander verdrillbar sind.

In der Figur 4h ist eine weitere Alternative einer Lageranordnung schematisch dargestellt. An einer Messplattform 102 ist am unteren Ende eine Kugelkalotte 103 angeordnet, welche auf drei, in einer kugelsegmentförmigen Schale 104 gehaltenen Kugel 105 gelagert ist. Die Plattform kann dabei eine Bewegung um die drei Rotationsfreiheitsgrade vollziehen. Die halbkugelförmige Schale 104 kann dabei auf einer weiteren Platte angeordnet sein, an welcher eine zusätzliche Lagervorrichtung zur Bewegung innerhalb einer Ebene angeordnet ist oder kann direkt auf einem Träger montiert werden.

Obgleich bereits eine Vielzahl von möglichen Lageranordnungen diskutiert wurde, sind weitere Lageranordnungen möglich. So kann beispielsweise der in der Figur 4a erläuterte Halbzylinder jeweils durch eine Vielzahl von Halbkugeln oder gelagerten Vollkugeln ersetzt werden. Desweiteren könnte der Zylinder durch ein radiales Segmentluftlager ersetzt werden. Desweiteren können die verschiedenen dargestellten Lager derart miteinander kombiniert werden, dass jeweils eine Bewegung der Messplattform gegenüber dem Träger in zwei bis fünf Freiheitsgraden möglich ist.

Anhand der Figuren 5 soll ein Mechanismus zu Justage der Vorrichtung erläutert werden. In den Figuren 5 ist ein Ausschnitt der in der Figur 4a (und Figur 4b) dargestellten Anordnung gezeigt. Die Figuren 5a und und 5c, sowie 5b und 5d zeigen jeweils um 90° um die z-Achse rotierte Darstellungen einer Vorrichtung zur Bestimmung der Trägheitseigenschaften. Die Messplattform 52 ist auf einer Lageranordnung 57 angeordnet, welcher wie in der Figur 4 beschrieben einen Zylinder 58, eine geschliffene Platte 59 und einen zweiten im 90°-Winkel zum ersten Zylinder 58 angeordneten Zylinder 60 umfasst. Der Zylinder 60 rollt auf einer weiteren Platte 56 ab. Obgleich die Messplattform 52 im Idealfall lediglich Rollbewegungen um eine Null-Lage ausführt, kann es zu einem seitlichen Versatz beispielsweise des Zylinders 58 gegenüber der Platte 59 kommen. Um vor einer Messung eine Hardware-Kalibrierung der Vorrichtung durchzuführen, umfasst diese einen Mechanismus 110 zur Justage der Messplattform 52 in der Null-Position. Die Justage kann beispielsweise mittels mindestens eines, vorzugsweise zweier Kugelköpfe 111 und einer korrespondierenden Vorrichtung 112 zum Eingreifen auf den Kugelkopf durchgeführt werden. Die Vorrichtung 112 kann beispielsweise eine Kegelform umfassen, welche zur Selbstjustierung der Messplattform an dem Kugelkopf angreift. Zum Kalibrieren der Vorrichtung wird zunächst eine Kraft auf die linke Seite der Messplattform 52 ausgeübt. Hierdurch senkt sich die Vorrichtung 112 auf den Kugelkopf 111 bis sich der Zylinder 58 von der Platte 59 löst. Durch das Kalibrieren der Vorrichtung auf dem Kugelkopf wird zudem erreicht, dass die Messplattform 52 gegenüber der Platte 59 und der Platte 56 ausgerichtet wird. Dies ist beispielsweise in der Figur 5b erkennbar.

Anhand der Figuren 5c und 5d ist klar erkennbar, dass die Vorrichtung zur Justage 110 auch eine Ausrichtung entlang der y-Achse bewirkt, da eine Mehrzahl von Vorrichtungen, in diesem Falle zwei Vorrichtungen, vorhanden sind. Ebenfalls erkennbar ist in der Figur 5d, dass durch Einrasten der Vorrichtungen 112 auf den Kugelköpfen 111 eine Justage der Lagervorrichtung 57 erreicht wird. Anschließend ist die Messplattform gegenüber der Platte 56 kalibriert und die Messung kann initiiert werden.

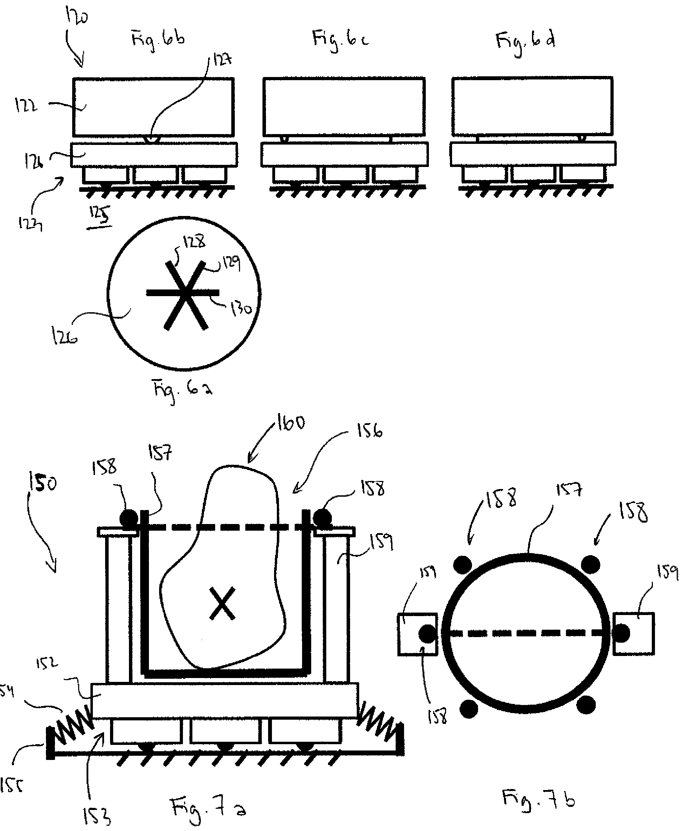

Eine weitere Variante einer Vorrichtung soll anhand der Figuren 6 erläutert werden. Die Vorrichtung 120 umfasst eine Messplattform 122, eine Lagervorrichtung 123, sowie nicht näher dargestellte Rückstellelemente 124. Die Lagervorrichtung 123 umfasst neben einem ebenen Lager 125 eine Platte 126, auf welcher ein einzelner Zylinder 127 liegt, so dass eine Rotation um eine Achse möglich ist. In der Figur 6a ist eine Aufsicht auf die Platte 126 dargestellt. Es sind drei Nuten 128, 129 und 130 erkennbar, in welchen der Zylinder 120 gehalten wird. In den Figuren 6b bis 6d wird nun nacheinander der Zylinder 127 in den Nuten 128, 129 und 130 angeordnet, so dass jeweils unterschiedliche Freiheitsgrade des gegenüber der Messplattform 122 ortsfest fixierten Objekts zur Schwingung angeregt werden können. Hierdurch können nach und nach sämtliche Trägheitseigenschaften des zu vermessenden Objekts analysiert werden.

In den Figuren 7a und 7b ist eine weitere Variante einer Vorrichtung 150 dargestellt. Die Vorrichtung umfasst eine Messplattform 152, eine Lagervorrichtung 153 sowie Rückstellelemente 154, welche an einem Träger 155 befestigt sind. Bei der Lageranordnung handelt es sich um ebene Luftlager, welche eine Bewegung innerhalb der x/y-Ebene und eine Rotation um die z-Achse ermöglichen. Auf der Messplattform 152 befindet sich zusätzlich eine Schwerependelanordnung 156, bei welcher ein Adapter 157 an zwei Aufhängepunkten 158 auf Aufhängeflächen 159 der Messplattform um eine als gestrichelte Linie eingezeichnete Pendelachse gependelt werden kann. Durch das Pendeln wird eine Rotation des zu vermessenden Körpers 160 um beispielsweise die x-Achse möglich. Somit kann mit der vorliegenden Vorrichtung zeitgleich eine Vermessung von vier Freiheitsgraden durchgeführt werden. Die Aufhängepunkte 158 sind als Kugelkalotten ausgebildet. In der Figur 7b sind die Auflageflächen 159, sowie die Vielzahl der Aufhängungspunkte 158 dargestellt. Um den Körper 160 entsprechend zu vermessen, kann nun durch Rotation des Adapters 157 im oder gegen den Uhrzeigersinn durchgeführt werden, so dass verschiedene Auflagepunkte auf den Auflageflächen 159 zum Aufliegen kommen. Auf diese Weise ist eine vollständige Vermessung des Objekts möglich.

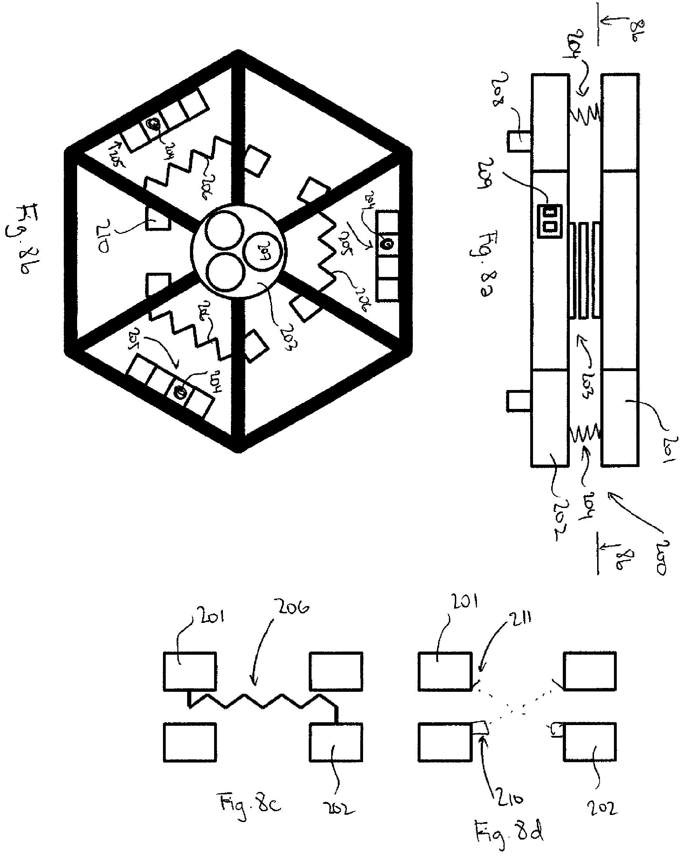

Anhand der Figuren 8 soll eine weitere Ausführungsform einer Vorrichtung erläutert werden. Die Figur 8a zeigt eine Vorrichtung 200 in einer Seitenaufsicht, wohingegen die Figur 8b einen Schnitt durch die Vorrichtung 200 darstellt. Die Figuren 8c und 8d zeigen verschiedene Detailansichten der Vorrichtung 200.

Die Vorrichtung 200 umfasst eine Messplattform 201 und einen Träger 202, wobei Messplattform 201 und Träger 202 jeweils ein sechseckiges Metallgestell mit Streben zum Mittelpunkt des Sechsecks hin sind. Zwischen der Messplattform 201 und dem Träger 202 ist eine Lagervorrichtung 203 vorhanden, welche verschiedene lager oder Gelenke aufweisen kann, um eine Bewegung der Messplattform 201 gegenüber dem Träger 202 in zwei bis fünf Freiheitsgraden zu ermöglichen. Um eine Auslenkung der Messplattform 201 entgegenzuwirken sind weiterhin Rückstellelemente 204 und 206 vorhanden. Die Rückstellelemente 204 gehören zu einer ersten Gruppe von Rückstellelementen, welche im Wesentlichen vertikal wirkende Kräfte zwischen den Träger und der Messplattform aufnehmen. Bei den Rückstellelementen 204 handelt es sich um Druckfedern, welche jeweils mit dem Träger und der Messplattform verbunden sind, d.h. die Rückstellelemente sind unmittelbar am Träger und an der Messplattform angeordnet. Sowohl der Träger als auch die Messplattform weisen zudem Adapter 205 auf, in welchen zusätzliche Rückstellelemente eingehängt werden können. Im dargestellten Fall ist je Adapter 205 lediglich ein Rückstellelement vorhanden, wobei durch einfaches Hinzufügen bzw. Hinzuhängen weiterer Rückstellelemente die Gesamtsteifigkeit der Vorrichtung bzw. der Rückstellelemente anpassbar ist. Das Hinzufügen weiterer vertikale Kräfte aufnehmender Rückstellelemente ermöglicht auch das Vermessen von Objekten mit relativ hohem Schwerpunkt.

Die Rückstellelemente 206 bilden eine zweite Gruppe von Rückstellelementen, welche vorliegend als Zugfedern ausgebildet sind. Die Rückstellelemente 206 verlaufen im Wesentlichen horizontal, wie beispielsweise anhand der Figur 8c zu erkennen ist. Dabei nehmen die zweite Gruppe von Rückstellelementen 206 im Wesentlichen in der Ebene wirkende Kräfte zwischen der Messplattform 201 und dem Träger 202 auf. Hierdurch können beispielsweise bei translatorischen Bewegungen oder einer Rotation um die z-Achse Rückstellkräfte bereitgestellt werden.

Die Lagervorrichtung 203 ermöglicht eine Bewegung um fünf Freiheitsgrade. In dem Schnitt der Figur 8b sind lediglich ebene Luftlager 207 dargestellt, wobei die Vorrichtung weiterhin zwei aufeinander abrollende Zylinder, wie in der Figur 4a gezeigt, umfasst. Zudem umfasst der Träger 202 höhenverstellbare Füße 208, um eine Ausrichtung des Trägers parallel zur Ebene zu bewirken. Dabei können beispielsweise die Füße durch Ein- oder Ausschrauben in ihrer Höhe verstellt werden. Die Vorrichtung 200 umfasst zudem einen Datenbus bzw. eine Luftzufuhr 209, welche mit der Lagervorrichtung 203 sowie den Sensoren 210 verbunden ist. Über den Datenbus 209 lässt sich die Vorrichtung mit einer Datenverarbeitungsanlage verbinden, welche die durch die Sensoren 210 erfassten Daten auswertet und so die Trägheitseigenschaften des zu vermessenden Objekts ermittelt. Bei den Sensoren 210 handelt es sich um Laserabstandssensoren, welche mithilfe von beispielsweise Spiegeln 211, wie in der Figur 8d dargestellt, Abstandsmessungen durchführen und so die Bewegung der Messplattform 201 gegenüber dem Träger 202 erfassbar machen. Aus einer Auswertung der Frequenzen kann ein Objekt vollständig vermessen werden. Alternativ zu den Spiegeln können jedoch auch andere Flächen eingesetzt werden, z. B. Flächen aus Aluminium oder matte, nicht spiegelnde Flächen.

Obgleich in der vorliegenden Ausführungsform lediglich Abstandssensoren zum Erfassen der Frequenz verwendet werden, sind weitere Sensoren denkbar. Obgleich Kraftsensoren deutlich aufwendiger sind, können auch diese eingesetzt werden, dies ist jedoch in zahlreichen Ausführungsformen nicht vorgesehen.

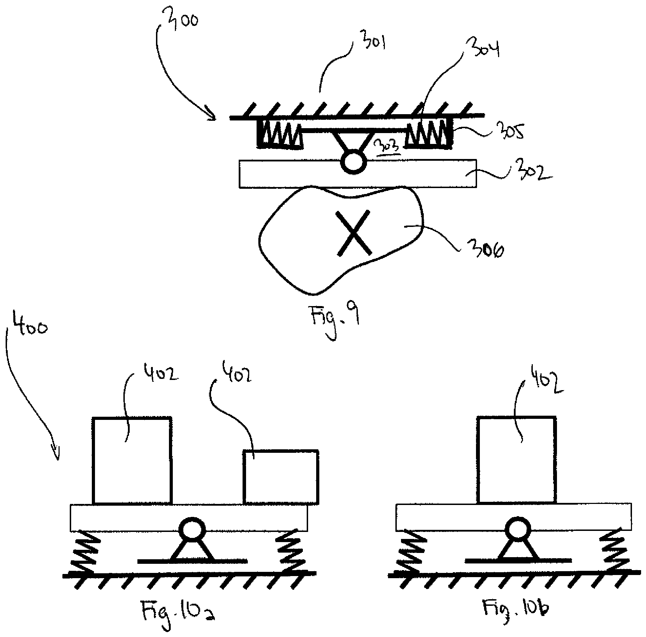

Anhand der Figur 9 soll eine weitere Ausführungsform einer Vorrichtung illustriert werden. Bei der Vorrichtung 300 ist ein Träger 301 vorhanden, welcher durch ein Gestell oder beispielsweise eine Raumdecke gebildet sein kann. Weiterhin umfasst die Vorrichtung 300 eine Messplattform 302, an welcher ein zu vermessendes Objekt 306 angehängt werden kann. Die Messplattform 302 ist über eine Lager- und/oder Gelenkanordnung 303 und über Rückstellelemente 304 mit dem Träger 301 verbunden. Da die Rückstellelemente bzw. die Lageranordnung 303 in Führungen 305 geführt werden bzw. wird, ist eine Bewegung entlang der z-Achse nicht möglich, allerdings ist die Lageranordnung innerhalb der x/y-Ebene bewegbar und kann eine Rotation um die z-Achse durchführen. Bei der Lageranordnung selbst handelt es sich um ein Kardangelenk, welches eine Bewegung um zwei Rotationsfreiheitsgrade ermöglicht. Da die Rückstellelemente 304 einer Bewegung innerhalb der x/y-Ebene bzw. einer Rotation um die z-Achse der Lagervorrichtung 3003 entgegenwirken und die Schwerkraft beim Pendeln der Messplattform 302 um die zwei Freiheitsgrade der Lageranordnung 303 eine "Rückstellkraft" bildet, kann im vorliegenden Ausführungsbeispiel auf Rückstellelemente zwischen der Messplattform 302 und dem Träger 301 verzichtet werden.

Wie die Lageranordnung 303 beschaffen ist, lässt sich im Wesentlichen analog aus den Lageranordnungen der vorherigen Ausführungsbeispiele erschließen. Dabei können Kardanlager verwendet werden. Auch die ebenen Lager sind einsetzbar. Es handelt sich somit bei der Vorrichtung 300 im Wesentlichen um ein Schwerependel, bei welchem der Aufhängungspunkt um bis zu drei Freiheitsgrade bewegt werden kann.

Anhand der Figuren 10a und 10b soll auf ein Kalibrierverfahren eingegangen werden. Die Vorrichtung 400 entspricht im Wesentlichen einem der Ausführungsbeispiele der Vorrichtung wie vorhergehend beschrieben. Die Gesamtsteifigkeit der Rückstellelemente sowie eine Massenmatrix der Messplattform und der Rückstellelemente kann durch die Verwendung von Kalibriermassen 402 genau bestimmt werden. Hierzu werden verschiedene Objekte, deren Trägheitseigenschaften bekannt sind, auf der Plattform platziert und Trägheitsmessungen durchgeführt. Nachdem die Gesamtsteifigkeitsmatrix und die Massenmatrix bestimmt worden sind, sind die Eigenschaften der Vorrichtung bekannt, sofern das zu vermessende Objekt derart auf der Plattform platziert wird, dass dessen Massenschwerpunkt im Wesentlichen genau oberhalb der Lageranordnung liegt und so durch diese getragen bzw. unterstützt wird. Die Messplattform hat bei den "echten" Messungen eines Objekts also die gleiche statische Nulllage wie bei den Kalibriermessungen.

## Patentansprüche

1. Vorrichtung (40) zur Bestimmung von Trägheitseigenschaften eines Objekts, wobei die Vorrichtung
- einen Träger,
- eine oberhalb des Trägers angeordnete Messplattform (42) zur Anordnung des Objekts,
- sowie eine Mehrzahl zwischen der Messplattform und dem Träger angeordnete Rückstellelemente (44) umfasst,
**dadurch gekennzeichnet,**
**dass** die Messplattform gegenüber dem Träger in bis zu fünf Freiheitsgraden bewegbar ist und eine Lageranordnung (43) derart zwischen dem Träger und der Messplattform angeordnet ist, dass diese eine Bewegung der Messplattform gegenüber dem Träger in mindestens zwei Freiheitsgraden ermöglicht, wobei die Messplattform über die Rückstellelemente und unabhängig von den Rückstellelementen über die Lageranordnung mit dem Träger verbunden ist.

2. Vorrichtung nach einem der vorhergehenden Ansprüche, wobei die Lageranordnung derart angeordnet ist, dass diese eine statische Last eines auf der Messplattform anzuordnenden und zu vermessenden Objekts aufnimmt.

3. Vorrichtung nach einem der vorhergehenden Ansprüche, wobei die Mehrzahl der Rückstellelemente Federelemente sind.

4. Vorrichtung nach einem der vorhergehenden Ansprüche, wobei die Messplattform gegenüber dem Träger in einer vertikalen translatorischen Bewegungsrichtung fixiert ist.

5. Vorrichtung nach einem der vorhergehenden Ansprüche, wobei die Mehrzahl von Rückstellelementen größer oder gleich einer Anzahl von Freiheitsgraden ist, in welchen die Messplattform frei bewegbar ist.

6. Vorrichtung nach einem der vorhergehenden Ansprüche, wobei die Vielzahl von Rückstellelementen eine erste und eine zweite Gruppe von Rückstellelementen umfasst, wobei die erste Gruppe von Rückstellelementen (204) derart angeordnet sind, dass diese vorwiegend vertikale Kräfte aufnehmen, und die zweite Gruppe von Rückstellelementen (206) derart angeordnet sind, dass diese vorwiegend horizontale Kräfte aufnehmen.

7. Vorrichtung nach einem der vorhergehenden Ansprüche, wobei der Träger vollständig unterhalb der Messplattform angeordnet ist.

8. Vorrichtung nach einem der vorhergehenden Ansprüche, wobei die Lageranordnung mindestens ein sphärisches Lager, ein Torsionslager, ein Kugellager, und/oder ein Kardanlager umfasst, welches derart angeordnet ist, dass die Messplatform in mindestens zwei Freiheitsgraden bewegbar ist.

9. Vorrichtung nach einem der vorhergehenden Ansprüche, wobei die Lageranordnung ein ebenes Gleitlager umfasst, welches derart angeordnet ist, dass die Messplattform in mindestens drei Freiheitsgraden bewegbar ist.

10. Vorrichtung nach einem der vorhergehenden Ansprüche, wobei die Lagervorrichtung eine Vorrichtung zur Justage (110) umfasst, so dass die Lageranordnung gegenüber dem Träger und/oder der Messplattform in einer vorbestimmten Position fixierbar ist.

11. Vorrichtung nach einem der vorhergehenden Ansprüche, wobei die Lageranordnung derart ausgebildet ist, dass ein Schwerpunkt der Messplattform durch die Lagervorrichtung unterstützt wird.

12. Vorrichtung nach einem der vorhergehenden Ansprüche, wobei eine Mehrzahl an Sensoren (210) vorhanden ist, um eine Bewegung der Messplattform gegenüber dem Träger messtechnisch zu erfassen und vorzugsweise am Träger angeordnet sind, und vorzugsweise ein Datenbus (209) vorhanden ist zur Kopplung der Vorrichtung mit einer Datenverarbeitungsanlage, wobei mit der Vielzahl der Sensoren erfasste Daten vom jeweiligen Sensor zum Datenbus übermittelt werden.

13. Vorrichtung (300) zur Bestimmung von Trägheitseigenschaften eines Objekts, wobei die Vorrichtung
- einen Träger,
- eine Messplattform (302) zur Anordnung des Objekts,
- sowie eine Lageranordnung (303) umfasst, wobei die Lageranordnung derart zwischen dem Träger und der Messplattform angeordnet ist, dass eine Bewegung der Messplattform gegenüber dem Träger in mindestens einem Freiheitsgrad möglich ist, dass der Träger oberhalb der Messplattform angeordnet ist und die Messplattform derart ausgebildet ist, dass das Objekt unter der Messplattform angeordnet wird,
**dadurch gekennzeichnet,**
**dass** die Lageranordnung über eine Mehrzahl von Rückstellelementen (304) mit dem Träger verbunden ist, dass die Lageranordnung gegenüber dem Träger senkrecht zu einer Richtung der Gewichtskraft in zwei Freiheitsgraden bewegbar ist.

14. Verfahren zur Kalibrierung einer Vorrichtung nach einem der Ansprüche 1 bis 13, **dadurch gekennzeichnet, dass** eine Massenmatrix der Plattform und der Mehrzahl der Rückstellelemente und eine Gesamtsteifigkeitsmatrix der Rückstellelemente in einer Kalibriermessung bestimmt werden mit einer Mehrzahl von Kalibrierobjekten (402) mit bekannten Trägheitseigenschaften.

15. Verfahren zur Bestimmung der Trägheitseigenschaften eines Objekts mit einer Vorrichtung nach einem der Ansprüche 1 bis 13, **dadurch gekennzeichnet, dass** das Objekt auf der Messplattform positioniert wird und eine zusätzliche Masse (8) mit bekannten Trägheitseigenschaften auf der Messplattform derart positioniert wird, das ein gemeinsamer Schwerpunkt von Objekt und zusätzlicher Masse direkt oberhalb oder direkt unterhalb der Lageranordnung liegt.

## Claims

1. A device (40) for determining inertia properties of an object, wherein the device comprises
- a support,
- a measurement platform (42) arranged above the support for arrangement of the object,
- and a plurality of restoring elements (44) arranged between the measurement platform and the support,
**characterized in that**
the measurement platform is movable relative to the support in up to five degrees of freedom and a bearing assembly (43) is arranged between the support and the measurement platform in such a way that the bearing assembly allows the measurement platform to move relative to the support in at least two degrees of freedom, wherein the measurement platform is connected to the support via the restoring elements and independently of the restoring elements via the bearing assembly.

2. The device according to one of the preceding claims, wherein the bearing assembly is arranged in such a way that it takes up a static load of an object that is to be arranged on the measurement platform and that is to be measured.

3. The device according to one of the preceding claims, wherein the plurality of restoring elements are spring elements.

4. The device according to one of the preceding claims, wherein the measurement platform is fixed relative to the support in a vertical direction of movement in translation.

5. The device according to one of the preceding claims, wherein the plurality of restoring elements is greater than or equal to a number of degrees of freedom in which the measurement platform is freely movable.

6. The device according to one of the preceding claims, wherein the plurality of restoring elements comprises a first and a second group of restoring elements, wherein the first group of restoring elements (204) are arranged in such a way that they take up predominantly vertical forces, and the second group of restoring elements (206) are arranged in such a way that they take up predominantly horizontal forces.

7. The device according to one of the preceding claims, wherein the support is arranged fully below the measurement platform.

8. The device according to one of the preceding claims, wherein the bearing arrangement comprises at least one spherical bearing, a torsion bearing, a ball bearing, and/or a cardan bearing, which is arranged in such a way that the measurement platform is movable in at least two degrees of freedom.

9. The device according to one of the preceding claims, wherein the bearing assembly comprises a flat plain bearing, which is arranged in such a way that the measurement platform is movable in at least three degrees of freedom.

10. The device according to one of the preceding claims, wherein the bearing device comprises an adjustment device (110) so that the bearing assembly is fixable in a predetermined position relative to the support and/or the measurement platform.

11. The device according to any one of the preceding claims, wherein the bearing assembly is designed in such a way that the center of gravity of the measurement platform is supported by the bearing device.

12. The device according to one of the preceding claims, wherein a plurality of sensors (210) is provided in order to measure a movement of the measurement platform relative to the support and are preferably arranged on the support, and a data bus (209) is preferably provided for coupling the device to a data processing facility, wherein data detected by the plurality of sensors are transmitted from the relevant sensor to the data bus.

13. A device (300) for determining inertia properties of an object, wherein the device comprises
- a support,
- a measurement platform (302) for arrangement of the object,
- and a bearing assembly (303), wherein the bearing assembly is arranged between the support and the measurement platform in such a way that the measurement platform is movable relative to the support in at least five degrees of freedom, the support is arranged above the measurement platform, and the measurement platform is designed in such a way that the object is arranged below the measurement platform,
**characterized in that**
the bearing assembly is connected to the support via a plurality of restoring elements (304), and **in that** the bearing assembly is movable relative to the support in two degrees of freedom perpendicularly to a direction of the weight force.

14. A method for calibrating a device according to one of claims 1 to 13, **characterized in that** a mass matrix of the platform and the plurality of the restoring elements and an overall rigidity matrix of the restoring elements are determined in a calibration measurement with a plurality of calibration objects (402) with known inertia properties.

15. A method for determining the inertia properties of an object using a device according to one of claims 1 to 13,
**characterized in that** the object is positioned on the measurement platform and an additional mass (8) with known inertia properties is positioned on the measurement platform in such a way that a common center of gravity of the object and the additional mass lies directly above or directly beneath the bearing assembly.

## Revendications

1. Dispositif (40) de détermination de propriétés d'inertie d'un objet, le dispositif comprenant
- un support,
- une plateforme de mesure (42) disposée au-dessus du support pour la mise en place de l'objet,
- ainsi qu'une multiplicité d'éléments de rappel (44) disposés entre la plateforme de mesure et le support,
**caractérisé en ce**
**que** la plateforme de mesure est mobile en jusqu'à cinq degrés de liberté par rapport au support et un ensemble de palier (43) est disposé entre le support et la plateforme de mesure de sorte que celui-ci permette un déplacement de la plateforme de mesure en au moins deux degrés de liberté par rapport au support, où la plateforme de mesure est reliée avec le support par le biais des éléments de rappel et de manière indépendante par rapport aux éléments de rappel par le biais de l'ensemble de palier.

2. Dispositif selon l'une des revendications précédentes, dans lequel l'ensemble de palier est disposé de telle manière que celui-ci compense une charge statique d'un objet à associer à la plateforme de mesure et à mesurer.

3. Dispositif selon l'une des revendications précédentes, dans lequel la multiplicité des éléments de rappel est constituée d'éléments ressorts.

4. Dispositif selon l'une des revendications précédentes, dans lequel la plateforme de mesure est fixée dans une direction de déplacement par translation verticale par rapport au support.

5. Dispositif selon l'une des revendications précédentes, dans lequel la multiplicité des éléments de rappel est égale ou supérieure au nombre de degrés de liberté dans lesquels la plateforme de mesure peut se déplacer librement.

6. Dispositif selon l'une des revendications précédentes, dans lequel la multiplicité des éléments de rappel comprend un premier et un deuxième groupe d'éléments de rappel, dans lequel le premier groupe d'éléments de rappel (204) est disposé de telle manière que ceux-ci absorbent principalement des forces verticales, et le deuxième groupe d'éléments de rappel (206) est disposé de telle manière que ceux-ci absorbent principalement des forces horizontales.

7. Dispositif selon l'une des revendications précédentes, dans lequel le support est disposé totalement en-dessous de la plateforme de mesure.

8. Dispositif selon l'une des revendications précédentes, dans lequel l'ensemble de palier comprend au moins un palier sphérique, un palier de torsion, un roulement à billes, et/ou un palier de cardan, lequel est disposé de telle manière que la plateforme de mesure puisse être déplacée en au moins deux degrés de liberté.

9. Dispositif selon l'une des revendications précédentes, dans lequel l'ensemble de palier comprend un palier lisse plan, lequel est disposé de telle manière que la plateforme de mesure puisse être déplacée en au moins trois degrés de liberté.

10. Dispositif selon l'une des revendications précédentes, dans lequel le dispositif de roulement comprend un dispositif d'ajustement (110), de sorte que l'ensemble de palier puisse être fixé dans une position prédéterminée par rapport au support et/ou à la plateforme de mesure.

11. Dispositif selon l'une des revendications précédentes, dans lequel l'ensemble de palier est configuré de telle manière qu'un centre de gravité de la plateforme de mesure est soutenu par le dispositif de palier.

12. Dispositif selon l'une des revendications précédentes, dans lequel une multiplicité de capteurs (210) est présente afin de détecter par une technique de mesure un déplacement de la plateforme de mesure par rapport au support et est de préférence disposée sur le support, et de préférence, un bus de données (209) est présent pour le couplage du dispositif avec une installation de traitement de données, où les données détectées avec la multiplicité de capteurs sont transmises par le capteur respectif vers le bus de données.

13. Dispositif (300) de détermination de propriétés d'inertie d'un objet, le dispositif comprenant
- un support,
- une plateforme de mesure (302) pour le dépôt de l'objet,
- ainsi qu'un ensemble de palier (303), où l'ensemble de palier est disposé entre le support et la plateforme de mesure de telle manière qu'un déplacement de la plateforme de mesure par rapport au support est possible en au moins un degré de liberté, que le support est disposé au-dessus de la plateforme de mesure et la plateforme de mesure est configurée de telle manière que l'objet est disposé en-dessous de la plateforme de mesure,
**caractérisé en ce**
**que** l'ensemble de palier est relié avec le support par le bais d'une multiplicité d'éléments de rappel (304) de sorte que l'ensemble de palier est mobile par rapport au support de manière perpendiculaire par rapport à une direction de la force de gravité en deux degrés de liberté.

14. Procédé d'étalonnage d'un dispositif selon l'une des revendications 1 à 13, **caractérisé en ce qu'**une matrice de masse de la plateforme et de la multiplicité des éléments de rappel et une matrice de rigidité totale des éléments de rappel sont déterminées dans une mesure d'étalonnage avec une multiplicité d'objets d'étalonnage (402) d'inertie connues.

15. Procédé de détermination des propriétés d'inertie d'un objet avec un dispositif selon l'une des revendications 1 à 13,
**caractérisé en ce que** l'objet est positionné sur la plateforme de mesure et une masse (8) supplémentaire avec des propriétés d'inertie connues est positionnée sur la plateforme de mesure de telle manière qu'un centre de gravité commun de l'objet et de la masse supplémentaire se situe directement au-dessus ou directement en-dessous de l'ensemble de palier.
